# EUROPÄISCHE PATENTSCHRIFT

(11) **EP 2 300 723 B1**
(45) Veröffentlichungstag und Bekanntmachung des Hinweises auf die Patenterteilung: **14.08.2013**
(21) Anmeldenummer: 09761352.5
(22) Anmeldetag: 23.04.2009
(51) Int. Cl.: F16B 5/01, F16B 13/06

(54) **SPREIZHÜLSE UND VERBINDUNG**
EXPANDING SLEEVE AND JOINT
DOUILLE EXPANSIBLE ET ASSEMBLAGE

(30) Priorität: 09.06.2008 DE 102008027398; 29.07.2008 DE 102008035276
(43) Veröffentlichungstag der Anmeldung: 30.03.2011
(73) Patentinhaber: Flaig, Hartmut, 78554 Aldingen (DE)
(72) Erfinder: HOLSCHER, Winfried, K. W., 78234 Engen (DE)
(74) Vertreter: Wagner, Kilian
(86) Internationale Anmeldenummer: PCT/EP2009/002946
(87) Internationale Veröffentlichungsnummer: WO 2009/149789

(56) Entgegenhaltungen:
- DE-U1- 29 823 963
- FR-A- 2 577 629
- GB-A- 663 997
- US-A- 3 312 139
- US-A- 3 579 942
- US-A- 3 668 966

## Beschreibung

Die Erfindung betrifft ein Verfahren zum Einbringen einer Spreizhülse in ein Weichmaterial gemäß dem Oberbegriff des Anspruchs 1.

Für die Anbringung von Zugmitteln in Weichmaterialien besteht hoher Bedarf in vielfältiger Weise. Unter Weichmaterial sind vor allem Materialien wie Holz, Plastik oder Aluminiumschaum o. dgl. zu verstehen. Zur Befestigung von Zugmitteln dienen üblicherweise Schraubverbindungen oder Nietverbindungen, welche im Weichmaterial gehalten sind und dann direkt einer Zugbelastung ausgesetzt werden. Üblicherweise sind Schrauben oder Nieten für Weichmaterialien entsprechend ausgelegt. So haben Holzschrauben beispielsweise eine vergleichsweise große Auflagefläche. Solche und andere Maßnahmen sind üblich, um die Haltefestigkeit der genannten Verbindungen im Weichmaterial zu verbessern.

Es hat sich jedoch gezeigt, dass die Haltefestigkeit üblicher Verbindungen vergleichsweise begrenzt ist - dies letztlich deswegen, weil selbst bei Sonderanfertigungen vergleichsweise wenig Auflagefläche im Weichmaterial zur Verfügung gestellt werden kann. Dies führt dazu, dass vor allem bei zunehmender Zugbelastung die Verbindung im Weichmaterial durchrutschen und sich lösen kann. Eine gesicherte Verbindung vor allem für hohe Zugfestigkeiten lässt sich somit mit üblichen Verbindungsmitteln nicht darstellen. Hinzu kommt, dass übliche Verbindungsmittel zumeist nicht maßhaltig sind, da sie - ähnlich wie eine Holzschraube o. dgl. - direkt in das Weichmaterial zur Befestigung eingebracht werden. Wünschenswert wäre ein Verbindungsmittel, welches speziell zur Einbringung in Weichmaterialien ausgelegt ist. Dabei sollte auch bei hohen Zuglasten eine gesicherte Verbindung gewährleistet und eine Maßhaltigkeit im Verbindungsmittel gegeben sein.

Verschiedene Verbindungsmittel sind in der FR 2 577 629 A, der US 3 579 942 A, der US 3 668 966 A, der GB 663 997 A, der US 3 312 139 A sowie der DE 298 23 693 U1 beschrieben. Aus der vorerwähnten GB 663 997 A ist dabei eine Spreizhülse zum Setzen in ein zwischen zwei Metallplatten angeordnetes Isolierungsmaterial bekannt, wobei die Spreizhülse einen sich entlang einer Spreizhülsenachse erstreckenden Hülsenmantel mit einem Übergangsrand aufweist, welcher in Einbaulage einer Einbringrichtung zugewandt ist, wobei der Hülsenmantel in einem in Einbringrichtung axial hinter dem Übergangsrand liegenden hinteren Bereich innenseitig ein Mittel zur Befestigung eines Zugmittels aufweist. Der Hülsenmantel weist in einem vor dem Übergangsrand liegenden vorderen Bereich eine Anzahl von am Übergangsrand angeordneten und axial gegen die Einbringrichtung gestellten Zinnen auf, welche in Einbaulage winklig zur Spreizhülsenachse über eine im hinteren Bereich des Hülsenmantels angeordnete Mantelfläche radial nach außen abkragen. Die bekannte Spreizhülse wird zum Einbringen in das Weichmaterial eingeschlagen. Zum Verhindern einer Drehbewegung sind entsprechende Formschlussmittel vorgesehen. Die Haftung der Zinnen im Weichmaterial scheint verbesserungsbedürftig.

Der Erfindung liegt die Aufgabe zugrunde ein Verfahren zum Einbringen eines Verbindungsmittels in ein Weichmaterial anzugeben, durch das selbst bei hohen Zugbelastungen eine sichere Verbindung und zudem Maßhaltigkeit gewährleistet ist.

Diese Aufgabe wird mit dem Merkmal des Anspruchs 1 gelöst. Das bei dem Verfahren zum Einsatz kommende Verbindungsmittel ist eine Spreizhülse zur Einbringung in ein Weichmaterial, welche einen sich entlang einer Spreizhülsenachse erstreckenden Hülsenmantel aufweist, welcher einen Übergangsrand aufweist, der in Einbaulage einer Einbringrichtung zugewandt ist. Vorzugsweise soll die Spreizhülse in Einbaulage entgegen der axialen Einbringrichtung auf Zug belastet werden. Erfindungsgemäß ist vorgesehen, dass der Hülsenmantel in einem in Einbringrichtung axial hinter dem Übergangsrand liegenden hinteren Bereich innenseitig ein Mittel zur Befestigung eines Zugmittels aufweist, und der Hülsenmantel in einem vor dem Übergangsrand liegenden vorderen Bereich eine Anzahl von am Übergangsrand angeordnete und axial gegen die Einbringrichtung gestellte Zinnen aufweist, welche Zinnen vorgesehen sind, wenigstens in Einbaulage quer zur Spreizhülsenachse über eine im hinteren Bereich des Hülsenmantels angeordnete Mantelfläche radial hinaus abzukragen.

Die Erfindung geht von der Überlegung aus, dass eine die Aufgabe erfüllende Verbindung zweiteilig sein sollte - somit aus einem Zugmittel und einem Zugaufnahmemittel bestehen sollte. Die Erfindung hat erkannt, dass das Zugaufnahmemittel in Form der erfindungsgemäßen Spreizhülse zu bilden ist. Die Spreizhülse weist zur Gewährleistung der Maßhaltigkeit gemäß dem Konzept der Erfindung zum einen in einem in Einbringrichtung axial hinter dem Übergangsrand liegenden hinteren Bereich des Hülsenmantels inneinseitig ein Mittel zur Befestigung des Zugmittels auf. Das Mittel zur Befestigung kann somit in der Spreizhülse definiert werden, beispielsweise in Form eines Gewindes, einer Rastnut o. dgl. Zum anderen hat die Erfindung gemäß ihrem Konzept erkannt, dass mit zunehmender Zugkraft am Zugaufnahmemittel in Form der Spreizhülse gewährleistet sein sollte, dass sich die Aufnahmefläche zur Aufnahme der Kraft im Weichmaterial im Zweifel erhöhen sollte. Davon ausgehend sind in einem vor dem Übergangsrand liegenden vorderen Bereich des Hülsenmantels eine Anzahl von am Übergangsrand angeordnete und axial gegen die Einbringrichtung gestellte Zinnen vorgesehen. Darüber hinaus sieht die Erfindung vor, dass die Zinnen wenigstens in Einbaulage quer zur Spreizhülsenachse über eine Mantelfläche des Hülsenmantels im hinteren Bereich radial hinaus abkragen. Dies hat zur Folge, dass bei zunehmender Zugbelastung der Abkragwinkel der Zinnen nur noch vergrößert wird und sich dadurch die Auflagefläche der Zinnen im Weichmaterial erhöht. Ein Herausziehen der Spreizhülse ist somit umso schwieriger je höher die Zugkraft wird. Das Konzept der Erfindung führt nicht nur zu einem Zugaufnahmemittel in Form der Spreizhülse, welches eine wesentlich höhere Auflagefläche als übliche Verbindungsmittel erlaubt. Darüber hinaus schlägt das Konzept der Erfindung aufgrund der abkragbaren Zinnen eine Lösung vor, die bei zunehmenden Zugkräften nur noch sicherer gewährleistet, dass die Verbindung hält. Grenzpunkt einer Zugbelastung kann allenfalls das in der Spreizhülse angebrachte Mittel zur Befestigung des Zugmittels sein. Dieses ist gemäß dem Konzept der Erfindung jedoch auf Maßhaltigkeit definiert auslegbar.

Insgesamt erlaubt das Konzept der Erfindung somit eine sichere Verbindung zur Anbringung in Weichmaterialien, welche maßhaltig ist und selbst für hohe Zugkräfte einen zunehmenden Halt gewährleistet.

Vorteilhafte Weiterbildungen der Erfindung sind den Unteransprüchen zu entnehmen, und geben im Einzelnen vorteilhafte Möglichkeiten an, das oben erläutere Konzept im Rahmen der Aufgabenstellung sowie hinsichtlich weiterer Vorteile zu realisieren.

Insbesondere ist das Mittel zur Befestigung des Zugmittels in Form eines Innengewindes gebildet. Dies hat den Vorteil, dass in die Spreizhülse ein Zugmittel definiert eingebracht werden kann und im Innengewinde einen definierten Halt findet, welcher maßhaltig ist. Die Art des Innengewindes genauso wie die Größe der Spreizhülse kann je nach definiertem Maximalzug ausgelegt werden. Darüber hinaus hat die Anbringung eines Innengewindes den Vorteil, dass dieses zur Anbringung der Spreizhülse mit gespreizten, d. h. im hinteren Bereich radial hinaus abkragenden, Zinnen im Weichmaterial angebracht werden kann. Zur näheren Erläuterung ist dazu beispielsweise in der Figurenbeschreibung ein entsprechendes Werkzeug in Form eines Spreizwerkzeuges o. dgl. beschrieben, welches unter Einführen eines Druckbolzens in die Spreizhülse das Spreizen der Zinnen beim Setzen der Spreizhülse im Weichmaterial bewirkt.

In einer ersten bevorzugten Variante wird der Druckbolzen mit einer Klemmzange od. dgl. Spreizwerkzeug in linearer Bewegung in die Spreizhülse gedrückt, was dazu führt, dass die Zinnen beim Setzen der Spreizhülse im Weichmaterial gespreizt werden. Eine solche Anbringungsart hat sich insbesondere als vorteilhaft erwiesen beim Setzen einer Spreizhülse z.B. in Aluminiumschaum. Aluminiumschaum wird insbesondere bei Sandwichverbundplatten aus Aluminium verwendet, bei denen zwischen zwei äußeren Aluminiumplatten der dazwischenliegende Raum mit Aluminiumschaum befüllt ist. Diesbezüglich hat sich insbesondere eine weiter unten ausgeführte Verbindung als vorteilhaft erwiesen, bei welcher die Zinnen der Spreizhülse an einer Platte eines Sandwichverbundes abgestützt sind.

Insbesondere bei andersartigen Weichmaterialien wie Holz oder Plastik hat es sich als vorteilhaft erwiesen, dass die Spreizhülse beim Setzen im Weichmaterial gedreht wird. Dementsprechend kann ein entsprechendes Spreizwerkzeug den Druckbolzen in drehender Bewegung in die Spreizhülse einführen und so unter Spreizen der Zinnen die Spreizhülse gleichzeitig beim Setzen im Weichmaterial drehen. Dies führt vorteilhaft dazu, dass das Weichmaterial um das Setzloch der - ursprünglich vorteilhaft glatt zylindrischen - Spreizhülse weggekratzt wird. Dadurch ergibt sich in besonders vorteilhafter Weise eine Anlagefläche der Zinnen im Weichmaterial. Bei Zugbelastung der Spreizhülse setzt sich diese - nachdem sie sich praktisch drehend eingefräst hat - vorteilhaft im Weichmaterial fest, wobei mit zunehmendem Anzugsmoment die Anlagefläche erhöht wird.

Insbesondere zur Realisierung der Verbindung als Schraubverbindung mit der Spreizhülse hat es sich als vorteilhaft erwiesen, den Hülsenmantel der Spreizhülse zylindrisch auszulegen. Insbesondere im ursprünglichen Zustand ist die Spreizhülse glatt zylindrisch, d.h. die Zinnen kragen noch nicht ab.

Selbstverständlich liegt es ebenso im Rahmen des Konzepts der Erfindung, Spreizhülsen mit anderen Querschnitten vorzusehen und anderen Befestigungsmitteln als Schraubbefestigungen. Grundsätzlich kann jede geeignete Verbindung gewählt werden, die eine definierte Zugbelastung und eine definierte Maßhaltigkeit erlauben.

Die Spreizhülse kann mit einer auf das Weichmaterial abgestimmten Anzahl von vorzugsweise drei, vier, fünf, sechs, sieben oder acht Zinnen versehen sein. Darüber hinaus kann vorteilhaft auch die Länge der Zinnen gemäß dem Weichmaterial ausgelegt sein. Bei der Auslegung wird berücksichtigt, dass eine Auflagefläche der Zinnen im Weichmaterial umso größer sein sollte je weicher das Weichmaterial ist. Vorzugsweise ist eine Zinne umso länger je weicher das Weichmaterial ist. Insbesondere hat es sich als vorteilhaft erwiesen, dass eine Mantelstärke des Hülsenmantels und/oder Durchmesser des Hülsenmantels umso größer ist, je weicher das Weichmaterial ist.

Die Auflagefläche sollte über übliche Auflageflächen hinaus, wie sie bei üblichen Verbindungsmitteln wie Holzschrauben od. dgl. bekannt sind, erhöht sein. Es hat sich gezeigt, dass die Zinnen wenigstens in Einbaulage quer zur Spreizhülsenachse über eine Mantelfläche des Hülsenmantels im hinteren Bereich um ein Kragmaß radial abkragen sollten. Das Kragmaß sollte größer sein als das 0,1-fache des Innendurchmessers des Hülsenmantels. Darüber hinaus haben sich insbesondere Kragmaße größer als das 0,2-fache, vorzugsweise größer als das 0,3-fache, insbesondere größer als 0,4-fache und ganz besonders größer als das 0,5-fache des Innendurchmessers des Hülsenmantels als vorteilhaft erwiesen.

Diese und ähnliche oben genannten Weiterbildungen der Erfindung führen dazu, dass sich das maximal mögliche Kragmaß entsprechend der Maximalauslegung des Anzugsmoments der Spreizhülse vorteilhaft einstellt. Mit zunehmendem Anzugsmoment erhöht sich das Kragmaß. Vorzugsweise werden die Zinnen bei Erhöhung des Anzugsmoments etwa bogenförmig nach außen abgebogen.

In einer besonders bevorzugten Weiterbildung ist vorgesehen, dass der Hülsenmantel im Bereich des Übergangsrandes eine Materialschwächung aufweist. Eine solche Materialschwächung hat sich als vorteilhaft erwiesen, um das Abbiegen der Zinnen bei Erhöhen des Anzugsmoments zu erleichtern. Insbesondere haben sich eine oder mehrere Einkerbungen oder Einstiche od. dgl. als vorteilhaft erwiesen. Beispielsweise kann eine Einkerbung oder ein Einstich mit im Wesentlichen V-förmigem Querschnitt dazu führen, dass das maximale Kragmaß einer Zinne bzw. der Abbiegewinkel der entsprechenden Zinne durch Schließen der etwa V-förmigen Kerbe oder des etwa V-förmigen Einstichs bestimmt bzw. begrenzt ist.

Es hat sich im Rahmen einer besonders bevorzugten Weiterbildung herausgestellt, dass eine Zinne vorteilhaft einen axial gegen die Einbringrichtung gestellten Zinnenrand aufweist, dessen Fläche - bei einer Zinne im nicht abkragenden Zustand - zur Spreizhülsenachse schräg nach innen verläuft. Das heißt - beispielsweise bei einer Spreizhülse mit noch nicht verformten Zinnen, z.B. in zylindrischer Form - ist vorgesehen, dass die Fläche des Zinnenrandes jedenfalls nicht in einem 90° - Winkel zur Achse der Spreizhülse verläuft, sondern vielmehr in einem unterhalb 90° liegenden Winkel. Beispielsweise kann also eine Fläche eines Zinnenrandes geradlinig schräg nach innen verlaufen. Dies hat den Vorteil, dass beim Setzen der Spreizhülse und dem anschließenden Aufspreizen der Zinnen die erforderliche Kraft zum Aufspreizen - ähnlich wie bei einer schiefen Ebene - gleichmäßig über die Fläche des Zinnenrandes zum Aufspreizen der Zinnen genutzt wird.

Im Rahmen einer besonders bevorzugten Weiterbildung hat es sich als vorteilhaft erwiesen, dass eine Fläche eines Zinnenrandes gekrümmt, vorzugsweise konkav gewölbt, schräg nach innen verläuft. Insbesondere eine konkave Wölbung der Fläche des Zinnenrandes hat sich als vorteilhaft erwiesen, um beim Abspreizen der Zinnen bis zum abgekragten Zustand ein Totpunkt und/oder Verkeilen der Zinnen im Weichmaterial oder an einer am Weichmaterial grenzenden Festfläche zu vermeiden. Insbesondere im Falle eines Abspreizens der Zinnen an einer Festfläche sorgt die gekrümmte, vorzugsweise konkav gewölbte, Fläche des Zinnenrandes dafür, dass diese gleichermaßen an der Festfläche abrollt. Solche und vergleichbare Maßnahmen führen dazu, dass der Kraftaufwand zum Abspreizen der Zinnen vergleichsweise gering gehalten wird und insbesondere gleichmäßig verläuft.

Darüber hinaus hat es sich als vorteilhaft erwiesen, dass der Hülsenmantel einen hinteren Rand aufweist, welcher im Wesentlichen ringförmig geschlossen ist. Insbesondere sollte ein hinterer Rand des Hülsenmantels frei von Zinnen sein.

Als besonders vorteilhaft hat sich die Verbindung in einem Verbundmaterial erwiesen, insbesondere in einem Verbundmaterial, welches in Form eines Sandwichverbundes gebildet ist, der wenigstens eine äußere Platte aufweist und ein hinter der oder zwischen den Platten angebrachtes Weichmaterial. Wie oben teilweise bereits erläutert, hat sich nämlich das Einbringen der Spreizhülse in das Weichmaterial direkt hinter der äußeren Platte als besonders zweckmäßig erwiesen, da die äußere Platte in besonders vorteilhafter Weise zum Abspreizen der Zinnen dienen kann indem nach dem Setzen der Spreizhülse im Weichmaterial dieselbe gegen die äußere Platte angezogen wird.

In besonders vorteilhafter Weise kann die Verbindung somit im Weichmaterial und an der äußeren Platte gehalten werden, indem die Zinnen der Spreizhülse sich an einer Platte eines Sandwichverbundes abstützen. Gerade diese Form der Verbindung erweist sich als zuverlässig selbst bei zunehmenden Zugbelastungen. Selbst bei unverhältnismäßig hohen und nicht vorauszusehenden hohen Zugbelastungen würden sich die Zinnen allenfalls an der äußeren Platte des Sandwichverbundes weiter abspreizen um so die Auflagefläche und damit die Zugfestigkeit der Verbindung zu erhöhen. Eine Lageveränderung oder gar ein Durchrutschen der Spreizhülse im Weichmaterial ist, anders als bei üblichen Verbindungen, praktisch ausgeschlossen.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1:: eine teilweise geschnittene Seitenansicht einer Platte mit sie durchsetzendem Schraubenschaft sowie einer koaxial zugeordneten Gewindespreizhülse;
- Fig. 2:: die axiale Draufsicht auf die Gewindespreizhülse;
- Fig. 3 bis 6:: teilweise geschnittene Seitenansichten unterschiedlicher Stellungen des Schraubenschaftes sowie der Schraubhülse als Einheit in zu Fig. 1 verkleinerter Darstellung;
- Fig. 7:: die gegenüber Fig. 1 formveränderte Schraubhülse;
- Fig. 8:: einen gegenüber Fig. 1, 7 vergrößerten Detailausschnitt der Schraubhülse;
- Fig. 9:: einen Schnitt durch eine Einheit, die an einem Profil festgelegt ist;
- Fig. 10:: eine Setzzange in Seitenansicht mit einer Einheit im Zangenkopf;
- Fig. 11:: die vergrößerte Einheit der Fig. 10 in anderer Detailstellung;
- Fig. 12:: eine teilweise geschnittene Frontansicht eines Spreizwerkzeuges für Gewindespreizhülsen;
- Fig. 13:: die Seitenansicht zu Fig. 12.

Einer horizontalen Platte 10 mit kreisförmigem Durchbruch 12 sitzt ein Schraubring 14 mit von einer -- eine querschnittlich gebogene Seitenkontur 16 aufweisenden -- Sockelscheibe 17 aufragend angeformtem zylindrischem Schraubhals 18 als Montagedose auf.

Den Schraubhals 18 durchsetzt ein -- von einer Druckhülse 20 umfangenes -- Rohr 22 des Durchmessers d von hier 11 mm mit einem Randstreifen 24, dessen Oberfläche zur Mittelachse A geneigt ist. In diesem Rohr 22 lagert axial ein Schraubstab 26 eines Durchmessers d2 von etwa 8 mm. Jenem Durchmesser d entspricht im Übrigen die Weite des Durchbruchs 12.

Die Mittelachse A bestimmt auch die Lage einer zugeordneten Gewindespreizhülse 30 der Länge a von 15 mm mit einem dem Durchmesser d des Rohres 22 entsprechenden Außendurchmesser d1. Die Gewindespreizhülse 30 enthält ein Innengewinde 32 sowie vorliegend vier von einem Hülsenrand 34 ausgehende, parallel zur Mittelachse A verlaufende Randschlitze 36, deren Länge a1 vorliegend etwa einem Drittel der Länge a entspricht bei einer Breite b von etwa 1 mm. Zwischen jedem Paar von Randschlitzen 36 ist eine Art Zinne 38 der Breite b von etwa 7 mm zu erkennen.

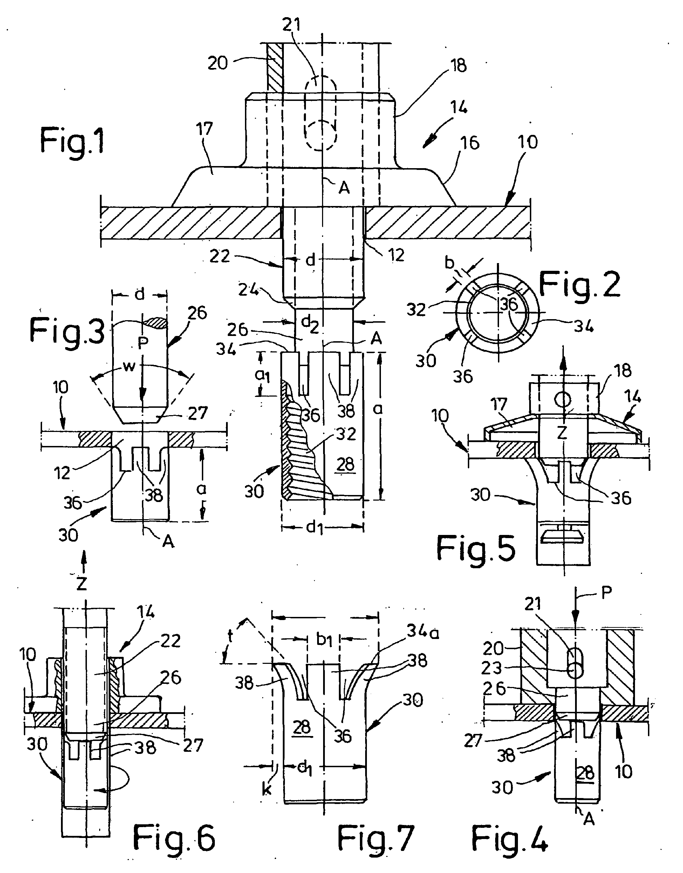

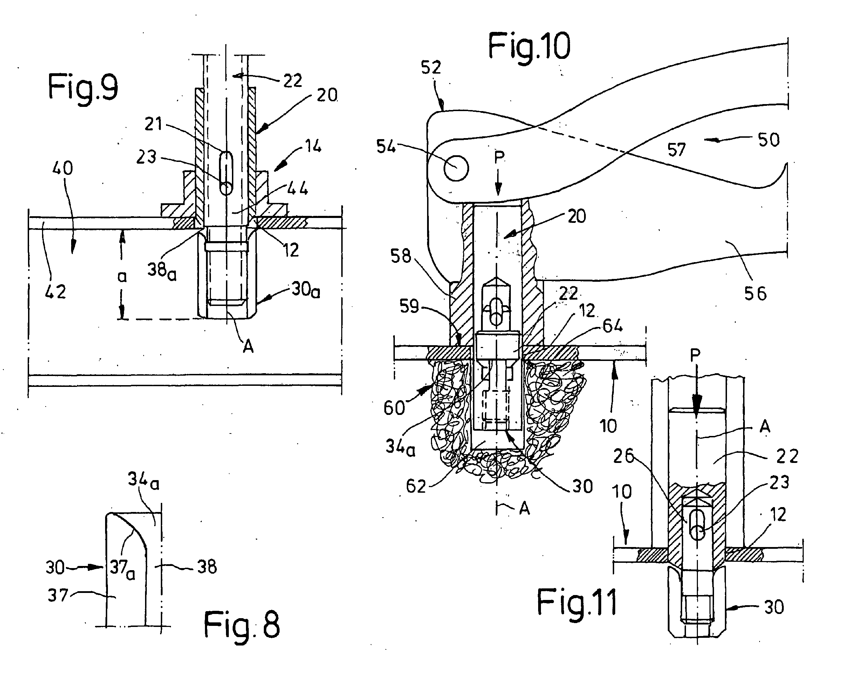

Wird das Rohr 22 und die Gewindespreizhülse 30 durch eine Kraft P zueinander geführt, drückt der in einem Winkel w von etwa 90° querschnittlich geneigte Rohrrand 27 od. dgl. Abschnitt des Schraubstabes oder Druckbolzens 26 den Hülsenrand 34 radial auseinander. Dieser Spreizzustand ist in Fig. 7 gezeigt; die Zinnen 38 werden nach außen gekrümmt, so dass die Zinnenränder 34a in einem Kragmaß k von etwa 3 mm zur Hülsenaußenfläche 28 von dieser abragen. In Fig. 7 wird auch deutlich, dass die Zinnenränder 34a -- und damit der Hülsenrand 34 -- in einem Winkel t von etwa 45° nach innen geneigt sind. In Fig. 7 ist nicht erkennbar, dass die Zinnenränder 34a querschnittlich etwas gekrümmt sind. Dies ist in Fig. 8 skizziert in einer vergrößerten Seitenansicht einer Zinne 38, deren Seitenfläche hier mit 37 bezeichnet ist; deren Kopfkontur 37a ist kontinuierlich gekrümmt.

Auch Fig. 4 zeigt, dass die Kraft P zwischen Rohr 22 und Gewindespreizhülse 30 zur Verformung der Zinnen 38 führt. Von dem Rohr 22 oder dem Druckbolzen 26 ragt ein Radialstift 23 ab, der in einen achsparallelen Führungsschlitz 21 einer Druckhülse 20 eingreift. Es wird ein Druck P ausgeübt, bis die Einheit steht.

In Fig. 5 wird auf die beschriebene Einheit axial Zug Z ausgeübt, in Fig. 6 Zug bei Drehung. Im Übrigen geben die Fig. 5, 6 -- gegenüber Fig. 1 -- weitere Gestaltungsformen eines Schraubringes 14 wieder.

Einen Seitenschenkel 42 eines Profils 40 der Fig. 9 kreuzt die Längsachse A einer Einheit aus einem Rohr 22 mit einer Gewindespreizhülse 30a. Mit 44 ist ein Freistich zwischen Rohr 22 und Seitenschenkel 42 bezeichnet. Nicht verdeutlicht ist, dass hier die Gewindespreizhülse 30a acht Zinnen 38a anbietet.

Gemäß Fig. 10, 11 weist ein in Fig. 10 teilweise geschnittene Zangenkopf 52 einer Setzzange 50 zwei durch einen Gelenkbolzen 54 verbundene und gegeneinander schwenkbare Stabelemente 56, 57 als Zangengriffe auf. Der Kopfabschnitt des einen Stabelements 56 weist einen radialen Formkörper 56 mit ebener Ansatzfläche 59 aus, in den eine Druckhülse 20 eingesetzt ist. Unterhalb einer Platte 10 ist ein Schaumstoffprofil 60 zu erkennen und in diesem ein etwa zylindrischer Kanal 62 mit seitlichem Lunker 64. Der Kanal 22 setzt unterhalb des Durchbruches 12 der Platte 10 an und nimmt eine Gewindespreizhülse 30 auf, deren Zinnenrändern 34a das Rohr 22 der Druckhülse 20 zugeordnet ist.

Ein Spreizwerkzeug 70 für Gewindespreizhülsen weist einen kubusartigen Grundkörper 72 der Seitenlängen c von 50 mm sowie einer Höhe h von 40 mm auf mit einer der Mittelachse M zugeordneten kielartigen Anformung 74 einer Höhe h1 von 20 mm sowie einer Breite e von 30 mm. Beidseits dieser Anformung 74 ist eine Stufenfläche 76 zu erkennen.

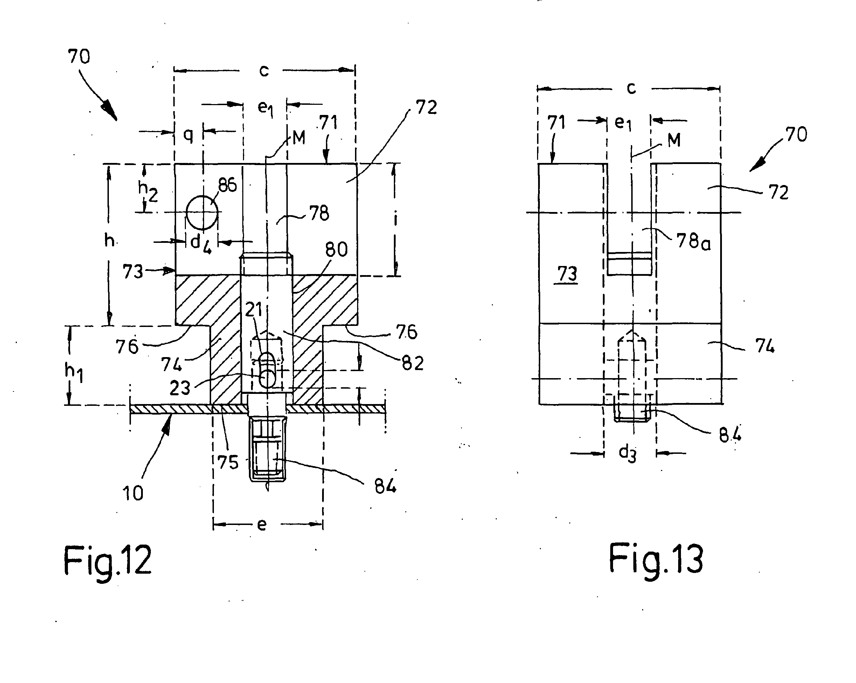

In jener Mittelachse M kreuzen sich zwei von der Kopffläche 71 des Grundkörpers 72 ausgehende schlitzartige Kanäle 78, 78a der Breite e1 von 12 mm und der Tiefe i von 28 mm. An deren Kreuzungspunkt setzt eine Vertikalbohrung 80 des Durchmessers d3 von 14 mm an zur Aufnahme eines Druckbolzens 82. Dieser endet gemäß Fig. 12 in Abstand zur Bodenfläche 75 der Anformung 74. In den zumindest teilweise hohlen Druckbolzen 82 greift axial ein Gewindebolzen 84 ein, von dem ein Radialstift 23 abragt, dem ein vertikaler Führungsschlitz 21 des Druckbolzens 82 zugeordnet ist.

In Fig. 12 ist im Übrigen eine zu den Stufenflächen 76 parallele Bohrung 86 des Grundkörpers 72 zu erkennen, deren Durchmesser d4 hier 8 mm misst bei einem mittigen Abstand q gleicher Größe von der Seitenfläche 73 des Grundkörpers 72 bzw. einem mittigen Abstand h2 von 12 mm von dessen Kopffläche 71.

### Bezugszeichenliste

| | | | | |
|---|---|---|---|---|
| | | 52 | Zangenkopf v. 50 | a = länge v. 30 |
| | | | | a1 = Länge v.36 |
| | | 54 | Gelenkbolzen | |
| | | | | b = Breite v. 36 |
| | | 56 | Stabelement v. 52 | b1 = Breite v. 38 |
| | | 57 | Stabelement v.52 | |
| | | 58 | Formkörper in 56 | c = Seitenlänge v. 72 |
| | | 59 | Ansatzfläche v. 58 | |
| 10 | Platte | 60 | Schaumstoffprofil | d = Durchmesser v. 12, 22 |
| | | | | d1 = Außendurchmesser v. 30 |
| 12 | Durchbruch in 10, 42 | 62 | zylindrischer Kanal in 60 | d2 = Durchmesser v. 24 |
| | | | | d3 = Durchmesser v. 80 |
| 14 | Montagedose, Schraubring | 64 | Lunker an 62 | d4 = Durchmesser v. 86 |
| | | | | |
| 16 | Seitenkontur v. 17 | | | e = Breite v. 74 |
| 17 | Sockelscheibe v. 14 | | | e1 Breite v. 78, 78a |
| 18 | Schraubhals v. 14 auf 16 | | | |
| | | | | h = Höhe v. 72 |
| 20 | Druckhülse in 14 um 22 | 70 | Spreizwerkzeug | h1 = Höhe v. 74 |
| 21 | Führungsschlitz in 20, 82 | 71 | Kopffläche v. 70, 72 | h2 = mittiger Abstand 71-86 |
| 22 | Rohr in 14, 20 | 72 | Grundkörper v. 70 | |
| 23 | Radialstift an 22, 26, 84 | 73 | Seitenfläche v. 70, 72 | i = Tiefe v. 78, 78a |
| 24 | Randstreifen v. 22 | 74 | Anformung an 72 | |
| | | 75 | Bodenfläche v. 74 | k = Kragmaß 28-34a |
| 26 | Schraubstab, Druckbolzen in 22 | 76 | Stufenfläche an 72 | |
| 27 | Randstreifen v. 26 | | | q = mittiger Abstand 73j-86 |
| 28 | Hülsenaußenfläche v. 30 | 78 | Kanal in 72 (78a) | |
| | | | | t = Winkel an 34, 34a |
| 30 | Gewindespreizhülse für 26 | 80 | Vertikalbohrung an 78, 78a | |
| | | | | w = Winkel bei 27 |
| 32 | Innengewinde v. 30 | 82 | Druckbolzen in 80 | |
| | | | | |
| 34 | Hülsenrand v. 30 | 84 | Gewindebolzen in 82 | |
| | | | | |
| 36 | Randschlitz an 34 in 30 | 86 | Bohrung in 72 | A = Längs-, Mittelachse v. 22, 30 |
| 37 | Seitenfläche v. 38 an 36 | | | |
| 38 | Zinne | | | M = Mittelachse v. 70, 72 |
| | | | | |
| 40 | Profil | | | P = Druckkraft für 22 |
| | | | | |
| 42 | Seitenschenkel v. 40 | | | Z = Zugkraft für 22 |
| | | | | |
| 44 | Freistich unter 22 | | | |
| | | | | 34a = Zinnenrand v. 38 |
| | | | | |
| | | | | 37a = Kopfkontur v. 37 |
| | | | | |
| 50 | Setzzange | | | |

## Patentansprüche

1. Verfahren zum Setzen einer Spreizhülse (30) in Weichmaterial, wobei die Spreizhülse (30) folgende Merkmale aufweist:
einen sich entlang einer Spreizhülsenachse (A) erstreckenden Hülsenmantel, welcher einen Übergangsrand aufweist, der in Einbaulage einer Einbringrichtung zugewandt ist, wobei der Hülsenmantel in einem in Einbringrichtung axial hinter dem Übergangsrand liegenden hinteren Bereich innenseitig ein Mittel zur Befestigung eines Zugmittels aufweist, und der Hülsenmantel in einem vor dem Übergangsrand liegenden vorderen Bereich eine Anzahl von am Übergangsrand angeordnete und axial gegen die Einbringrichtung gestellte Zinnen (38) aufweist, welche Zinnen (38) vorgesehen sind, in Einbaulage quer zur Spreizhülsenachse über eine im hinteren Bereich des Hülsenmantels angeordnete Mantelfläche radial hinaus abzukragen,
**dadurch gekennzeichnet,**
**dass** die Spreizhülse (30) beim Setzen im Weichmaterial gedreht wird.

2. Verfahren nach Anspruch 1,
**dadurch gekennzeichnet,**
**dass** mit einem Spreizwerkzeug ein Druckbolzen in drehender Bewegung in die Spreizhülse (30) eingeführt wird und so die Spreizhülse (30) unter Spreizen der Zinnen (38) beim Setzen im Weichmaterial dreht.

3. Verfahren nach einem der Ansprüche 1 oder 2
**dadurch gekennzeichnet,**
**dass** die Zinnen (38) im ursprünglichen Zustand der Spreizhülse (30) nicht abkragen.

4. Verfahren nach einem der Ansprüche 1 bis 3,
**dadurch gekennzeichnet,**
**dass** das Mittel zur Befestigung in Form eines Innengewindes (32) gebildet ist.

5. Verfahren nach einem der Ansprüche 1 bis 4,
**dadurch gekennzeichnet,**
**dass** das Zugmittel in Form einer Schraube gebildet ist.

6. Verfahren nach einem der Ansprüche 1 bis 5,
**dadurch gekennzeichnet,**
**dass** der Hülsenmantel zylindrisch ist.

7. Verfahren nach einem der Ansprüche 1 bis 6,
**dadurch gekennzeichnet,**
**dass** der Hülsenmantel im Bereich des Übergangsrandes eine Materialschwächung, insbesondere eine oder mehrere Einkerbungen, Einstiche od. dgl. aufweist.

8. Verfahren nach einem der Ansprüche 1 bis 7,
**dadurch gekennzeichnet,**
**dass** die Anzahl von drei, vier, fünf, sechs, sieben oder acht Zinnen (38) vorgesehen ist.

9. Verfahren nach einem der Ansprüche 1 bis 8,
**dadurch gekennzeichnet,**
**dass** die Zinnen (38) vorgesehen sind, wenigstens in Einbaulage quer zur Spreizhülsenachse über eine im hinteren Bereich des Hülsenmantels angeordnete Mantelfläche um ein Kragmaß (k), welches größer ist als das 0.1-fache des Innendurchmessers des Hülsenmantels radial hinaus abzukragen, welches insbesondere größer ist als das 0.2-fache, das 0.3-fache, das 0.4-fache, das 0.5-fache des Innendurchmessers des Hülsenmantels.

10. Verfahren nach einem der Ansprüche 1 bis 9,
**dadurch gekennzeichnet,**
**dass** eine Zinne (38) einen axial gegen die Einbringrichtung gestellten Zinnenrand (34a) aufweist, dessen Fläche bei nicht abkragender Zinne (38) zur Spreizhülsenachse schräg nach innen verläuft.

11. Verfahren nach einem der Ansprüche 1 bis 10,
**dadurch gekennzeichnet,**
**dass** eine Fläche eines Zinnenrandes (34a) geradlinig schräg nach innen verläuft.

12. Verfahren nach einem der Ansprüche 1 bis 11,
**dadurch gekennzeichnet,**
**dass** eine Fläche eines Zinnenrandes (34a) gekrümmt, vorzugsweise konkav gewölbt, schräg nach innen verläuft.

13. Verfahren nach einem der Ansprüche 1 bis 12,
**dadurch gekennzeichnet,**
**dass** der Hülsenmantel im hinteren Bereich einen hinteren Rand aufweist, welcher ringförmig geschlossen ist.

14. Verfahren nach einem der Ansprüche 1 bis 13,
**dadurch gekennzeichnet,**
**dass** ein hinterer Rand des Hülsenmantels frei von Zinnen (38) ist.

## Claims

1. A method for setting an expansion sleeve (30) in soft material, with the expansion sleeve (30) having the following characteristics:
a sleeve casing that extends along an expansion sleeve axis (A) and features a transition edge that faces an insertion direction in the installed position, wherein the sleeve casing internally features a fastening means for a traction mechanism in a rear region that lies axially behind the transition edge referred to the insertion direction, wherein the sleeve casing features in a front region that lies in front of the transition edge a number of crenellations (38) that are arranged on the transition edge and axially set opposite to the insertion direction, and wherein said crenellations (38) are provided for radially protruding beyond a surface area arranged in the rear region of the sleeve casing transverse to the expansion sleeve axis in the installed position,
**characterized in**
**that** the expansion sleeve (30) is turned while it is set in soft material.

2. The method according to Claim 1,
**characterized in**
**that** a setbolt is inserted into the expansion sleeve (30) in the form of a rotational motion by means of an expansion tool and thusly turns the expansion sleeve (30) while it is set in soft material and simultaneously expands the crenellations (38).

3. The method according to Claim 1 or 2,
**characterized in**
**that** the crenellations (38) do not protrude in the original state of the expansion sleeve (30).

4. The method according to one of Claims 1 to 3,
**characterized in**
**that** the fastening means is realized in the form of an internal thread (32).

5. The method according to one of Claims 1 to 4,
**characterized in**
**that** the traction means is realized in the form of a screw.

6. The method according to one of Claims 1 to 5,
**characterized in**
**that** the cylinder casing is cylindrical.

7. The method according to one of Claims 1 to 6,
**characterized in**
**that** the sleeve casing features a material weakening, particularly in the form of one or more notches, punctures or the like, in the region of the transition edge.

8. The method according to one of Claims 1 to 7,
**characterized in**
**that** three, four, five, six, seven or eight crenellations (38) are provided.

9. The method according to one of Claims 1 to 8,
**characterized in**
**that** the crenellations (38) are provided for radially protruding beyond a surface area arranged in the rear region of the sleeve casing transverse to the expansion sleeve axis at least in the installed position, namely by a protruding dimension (k) that is greater than 0.1-times the inside diameter of the sleeve casing, particularly greater than 0.2-times, 0.3-times, 0.4-times or 0.5-times the inside diameter of the sleeve casing.

10. The method according to one of Claims 1 to 9,
**characterized in**
**that** a crenellation (38) features a crenellation edge (34a) that is axially set opposite to the insertion direction, wherein the surface of said crenellation edge extends obliquely inward toward the expansion sleeve axis in the non-protruding state of the crenellation (38).

11. The method according to one of Claims 1 to 10,
**characterized in**
**that** a surface of a crenellation edge (34a) extends obliquely inward in a linear fashion.

12. The method according to one of Claims 1 to 11,
**characterized in**
**that** a surface of a crenellation edge (34a) extends obliquely inward in a curved fashion, preferably in a concavely curved fashion.

13. The method according to one of Claims 1 to 12,
**characterized in**
**that** the sleeve casing features in the rear region a rear edge that is annularly closed.

14. The method according to one of Claims 1 to 13,
**characterized in**
**that** a rear edge of the sleeve casing is free of crenellations (38).

## Revendications

1. Procédé pour positionner une douille expansible (30) dans un matériau tendre, la douille expansible (30) présentant les caractéristiques suivantes :
une enveloppe de douille s'étendant le long d'un axe de douille expansible (A), qui présente un bord de transition qui est tourné dans la position d'installation dans la direction d'introduction, l'enveloppe de douille présentant, dans une région arrière située axialement derrière le bord de transition dans la direction d'introduction, du côté intérieur, un moyen pour la fixation d'un moyen de traction, et l'enveloppe de douille présentant, dans une région avant située en avant du bord de transition, une pluralité de dents (38) disposées sur le bord de transition et disposées axialement dans le sens inverse de la direction d'introduction, lesquelles dents (38) sont prévues pour s'ouvrir radialement dans la position d'installation transversalement à l'axe de douille expansible au-delà d'une surface d'enveloppe disposée dans la région arrière de l'enveloppe de douille,
**caractérisé en ce que**
la douille expansible (30) est tournée dans le matériau tendre lors de son positionnement.

2. Procédé selon la revendication 1,
**caractérisé en ce**
**qu'**un boulon de pression est introduit par un mouvement de rotation dans la douille expansible (30) au moyen d'un outil d'écartement, et la douille expansible (30) est ainsi tournée lors de son positionnement dans le matériau tendre avec écartement des dents (38).

3. Procédé selon l'une quelconque des revendications 1 ou 2,
**caractérisé en ce que**
les dents (38) ne s'ouvrent pas dans l'état initial de la douille expansible (30).

4. Procédé selon l'une quelconque des revendications 1 à 3,
**caractérisé en ce que**
le moyen pour la fixation est réalisé sous forme de filetage interne (32).

5. Procédé selon l'une quelconque des revendications 1 à 4,
**caractérisé en ce que**
le moyen de traction est réalisé sous forme de vis.

6. Procédé selon l'une quelconque des revendications 1 à 5,
**caractérisé en ce que**
l'enveloppe de douille est cylindrique.

7. Procédé selon l'une quelconque des revendications 1 à 6,
**caractérisé en ce que**
l'enveloppe de douille présente, dans la région du bord de transition, un affaiblissement de matière, notamment une ou plusieurs encoches, entailles ou similaires.

8. Procédé selon l'une quelconque des revendications 1 à 7,
**caractérisé en ce**
**qu'**on prévoit trois, quatre, cinq, six, sept ou huit dents (38).

9. Procédé selon l'une quelconque des revendications 1 à 8,
**caractérisé en ce que**
les dents (38) sont prévues pour s'ouvrir radialement au moins dans la position d'installation, transversalement à l'axe de douille expansible, au-delà d'une surface d'enveloppe disposée dans la région arrière de l'enveloppe de douille, d'une mesure d'ouverture (k) supérieure à 0,1 fois le diamètre intérieur de l'enveloppe de douille, laquelle mesure d'ouverture est notamment supérieure à 0,2 fois, 0,3 fois, 0,4 fois, 0,5 fois le diamètre intérieur de l'enveloppe de douille.

10. Procédé selon l'une quelconque des revendications 1 à 9,
**caractérisé en ce**
**qu'**une dent (38) présente un bord de dent (34a) disposé axialement dans le sens inverse de la direction d'introduction, dont la surface s'étend obliquement vers l'intérieur par rapport à l'axe de douille expansible lorsque les dents (38) ne sont pas ouvertes.

11. Procédé selon l'une quelconque des revendications 1 à 10,
**caractérisé en ce**
**qu'**une surface d'un bord de dent (34a) s'étend obliquement en ligne droite vers l'intérieur.

12. Procédé selon l'une quelconque des revendications 1 à 11,
**caractérisé en ce**
**qu'**une surface d'un bord de dent (34a) s'étend obliquement vers l'intérieur, sous forme courbe, de préférence concave.

13. Procédé selon l'une quelconque des revendications 1 à 12,
**caractérisé en ce que**
l'enveloppe de douille présente, dans la région arrière, un bord arrière qui est fermé de manière annulaire.

14. Procédé selon l'une quelconque des revendications 1 à 13,
**caractérisé en ce**
**qu'**un bord arrière de l'enveloppe de douille est exempt de dents (38).
